# FASCICULE DE BREVET EUROPEEN

(11) **EP 1 697 238 B1**
(45) Date de publication et mention de la délivrance du brevet: **29.07.2009**
(21) Numéro de dépôt: 04821188.2
(22) Date de dépôt: 03.12.2004
(51) Int. Cl.: B65G 47/256, B29C 49/42

(54) **SYSTEME D'ALIMENTATION DE PREFORMES COMPORTANT UN DISPOSITIF D'ELIMINATION SELECTIVE DES PREFORMES MAL POSITIONNEES DE TYPE ALLONGE**
EINE VORRICHTUNG ZUM GEZIELTEN ENTFERNEN VON FALSCH POSITIONIERTEN LÄNGSVORFORMLINGEN UMFASSENDE VORFORMLINGZUFUHRVORRICHTUNG
PREFORM-SUPPLY DEVICE COMPRISING A DEVICE FOR THE SELECTIVE REMOVAL OF INCORRECTLY-POSITIONED LONGITUDINAL PREFORMS

(30) Priorité: 23.12.2003 FR 0351172
(43) Date de publication de la demande: 06.09.2006
(73) Titulaire: Sidel Participations, 76930 Octeville Sur Mer (FR)
(72) Inventeur: CHARPENTIER, Alain, 76930 OCTEVILLE SUR MER (FR)
(74) Mandataire: Kohn, Philippe
(86) Numéro de dépôt international: PCT/EP2004/053258
(87) Numéro de publication internationale: WO 2005/070793

(56) Documents cités:
- WO-A-02/36466
- US-A- 2 936 869
- US-A- 4 162 012
- US-A- 4 549 662
- US-A- 4 717 026
- US-A- 5 186 307

## Description

L'invention concerne un système d'alimentation de préformes, notamment destiné à alimenter une machine de soufflage de récipients, comportant des moyens de filtrage perfectionnés pour éliminer les préformes mal positionnées.

Le système d'alimentation sera plus particulièrement décrit dans le cadre de sa mise en oeuvre dans une installation de soufflage ou d'étirage-soufflage de préformes en PET (polyéthylène téréphtalate) pour la fabrication de récipients, notamment de récipients creux tels que des bouteilles ou des flacons.

En effet, selon une technique connue, de tels récipients sont généralement produits en deux étapes. Dans une première étape, on procède au moulage par injection d'une préforme en PET et dans une deuxième étape, on procède directement ou indirectement au soufflage de la préforme.

Actuellement, les préformes sont le plus souvent fabriquées par injection à l'aide d'une première machine puis sont moulées par soufflage à la forme définitive du récipient à l'aide d'une seconde machine, sur une machine de soufflage spécifique. Une telle technologie permet par exemple de procéder à l'opération de moulage par soufflage le plus près possible du lieu d'embouteillage, l'opération d'injection pouvant être effectuée en n'importe quel endroit.

Dans de tels cas où la machine d'injection et la machine de soufflage sont deux machines totalement indépendantes, l'installation comportant la machine de soufflage dispose alors généralement d'un système d'alimentation de préformes.

Le document WO-A-02/36466 décrit un exemple d'un système d'alimentation de préformes selon le préambule de la revendication 1.

La figure 1 de ce document représente schématiquement un système d'alimentation de préformes de type conventionnel destiné à alimenter une machine de soufflage de récipients.

Dans un tel système, les préformes sont le plus souvent déversées en vrac dans un bac, ou trémie, du système d'alimentation.

Les préformes sont prélevées de ce bac par un tapis élévateur qui, à son tour, vient déverser les préformes, selon un rythme pré-établi, à l'extrémité supérieure d'un dispositif de démêlage et d'alignement. Ce dispositif comporte généralement deux rouleaux d'alignement qui sont inclinés par rapport à l'horizontale et qui sont sensiblement parallèles l'un à l'autre. Les deux rouleaux sont entraînés en rotation selon des sens opposés, et sont écartés l'un de l'autre de manière à laisser subsister entre les deux rouleaux un intervalle, le long des deux rouleaux, qui est de dimension légèrement supérieure à la dimension du corps des préformes. Au contraire, l'écartement des deux rouleaux d'alignement est tel que l'espace transversal entre les deux rouleaux est inférieur à la dimension de la collerette de support située à la base du col de la préforme.

Le dispositif est configuré de telle manière que, sous l'effet de la gravité, les préformes sont forcées vers le fond du dispositif, c'est-à-dire sa partie où se trouvent les deux rouleaux. Ainsi, par simple gravité, chaque préforme tend à se disposer dans le dispositif, entre les deux rouleaux, de manière à être retenue en appui par sa collerette sur les rouleaux tout en ayant le corps pendant vers le bas entre les deux rouleaux. Le mouvement de rotation des rouleaux et leur inclinaison assure d'une part le placement des préformes les unes derrière les autres, dans la position préférentielle décrite plus haut, et d'autre part le glissement des préformes le long de l'axe longitudinal des rouleaux, vers la sortie du dispositif où elles sont récupérées dans une voie de cheminement formée par des rails de convoyage reliés par exemple à la machine de soufflage. Dans les rails de convoyage, les préformes s'accumulent ainsi de préférence en une file continue.

Toutefois, du fait que les préformes sont déversées en vrac dans le dispositif de démêlage et d'alignement, et du fait du caractère aléatoire du placement des préformes, certaines d'entre elles arrivent à sa sortie sans avoir pu se positionner correctement entre les deux rouleaux.

Des essais de fonctionnement ont notamment permis d'identifier les différentes positions incorrectes que sont susceptibles d'occuper les préformes dans un tel système.

Bien entendu, de telles préformes mal positionnées ne doivent en aucun cas parvenir à la machine. C'est la raison pour laquelle les systèmes d'alimentation de préformes comportent des moyens de filtrage, tels qu'une roue d'éjection, destinés à éliminer ces préformes.

Afin d'améliorer, dans les systèmes d'alimentation, l'élimination de ces préformes mal positionnées, le document WO-A-02/36466 propose d'utiliser comme moyen de filtrage une roue d'éjection qui est agencée au dessus des rouleaux d'alignement de manière à éjecter les préformes mal positionnées, plus particulièrement les préformes de type « emboîté debout », c'est-à-dire qui sont emboîtées verticalement l'une dans l'autre.

Cependant, une telle roue d'éjection ne donne pas entière satisfaction car elle ne parvient pas à éliminer tous les types de préformes mal positionnées et ne permet donc pas de réaliser un système d'alimentation qui soit totalement fiable.

On a notamment déterminé que certaines préformes pouvaient mal se positionner de manière à occuper une position incorrecte dans laquelle la préforme est couchée et orientée longitudinalement, c'est-à-dire s'étend parallèlement aux axes des rouleaux ou aux rails de convoyage.

En effet, une telle préforme, dite allongée, n'est pas éliminée par les moyens de filtrage actuel, notamment par une roue d'éjection selon le document WO-A-02/36466, et est par conséquent susceptible d'être convoyée par les rails jusqu'à la machine où elle risque d'occasionner des dommages dans l'installation. Bien entendu, une telle préforme allongée peut être seule ou encore emboîtée avec au moins une autre préforme allongée.

De surcroît, la présence de ces préformes allongées peut provoquer des bourrages pouvant entraîner des interruptions de la file de préformes convoyées, voire conduire à un arrêt de l'alimentation des préformes, et donc à un arrêt de la machine de soufflage du fait d'un manque de préformes.

Bien entendu, de tels arrêts ne sont pas souhaitables étant donné qu'ils peuvent entraîner l'arrêt de la ligne d'embouteillage située en aval de la machine de soufflage.

On connaît encore de l'état de la technique le document EP-A1-0.511.048 qui décrit un système d'alimentation de préformes comportant des moyens de filtrage constitués par des moyens de déséquilibrage intégrés aux rails et d'une roue d'éjection pour éliminer sélectivement les préformes mal positionnées de type "emboîtées" qu'elles soient emboîtées debout ou emboîtées couchées.

La figure 2 de ce document représente plus particulièrement sous la référence "6.1" des préformes emboîtées couchées qui couchées sur les glissières sont susceptibles d'avancer dans cette position et traitées par les moyens de déséquilibrage en vue de leur élimination.

Cependant, le fonctionnement des moyens de déséquilibrage repose sur l'exploitation de la différence de localisation du centre de gravité existant entre un ensemble formé par au moins deux préformes emboîtées qui sont allongées et une préforme seule, les moyens de déséquilibrage étant apte à provoquer le basculement d'un ensemble emboîté du type "6.1" mais pas d'une préforme seule.

Par conséquent, les moyens de déséquilibrage selon les enseignements de ce document ne donne pas encore entière satisfaction en raison du fait que ne sont pas éliminées la totalité des préformes mal positionnées de type "allongée", en particulier il est impossible d'éliminer les préformes dites "allongées seules".

L'invention a donc pour but de proposer un nouveau dispositif d'élimination sélective destiné à traiter les préformes mal positionnées et plus spécialement l'élimination des préformes dites "allongées seules" précédemment non résolue.

Avantageusement, l'invention est susceptible d'être mis en oeuvre, tout particulièrement mais non exclusivement, dans un système d'alimentation de préformes tel que celui décrit dans le document WO-A-02/36466.

Dans ce but, l'invention propose un système d'alimentation de préformes, notamment destiné à alimenter une machine de soufflage de récipients tels que des bouteilles, du type comportant d'amont en aval selon la direction longitudinale de défilement des préformes, au moins un dispositif de démêlage et d'alignement dont l'extrémité supérieure est approvisionnée en préformes en vrac et dont l'extrémité inférieure comporte au moins deux rouleaux d'alignement, sensiblement parallèles et entraînés en rotation autour de leur axe respectif, qui sont destinés à positionner les préformes dans des rails de convoyage, inclinés par rapport à l'horizontale, pour les convoyer vers la machine, et du type comportant, en amont de la machine, des moyens de filtrage pour éliminer les préformes mal positionnées, caractérisé en ce que les moyens de filtrage comportent, en aval des rouleaux d'alignement, au moins un dispositif d'élimination sélective agencé pour éliminer les préformes allongées seules qui arrivent des rouleaux sur les rails couchées et orientées longitudinalement, et qui s'étendent globalement longitudinalement sur les rails de convoyage. machine de soufflage de récipients tels que des bouteilles, du type comportant d'amont en aval selon la direction longitudinale de défilement des préformes, au moins un dispositif de démêlage et d'alignement dont l'extrémité supérieure est approvisionnée en préformes en vrac et dont l'extrémité inférieure comporte au moins deux rouleaux d'alignement, sensiblement parallèles et entraînés en rotation autour de leur axe respectif, qui sont destinés à positionner les préformes dans des rails de convoyage, inclinés par rapport à l'horizontale, pour les convoyer vers la machine, et du type comportant, en amont de la machine, des moyens de filtrage pour éliminer les préformes mal positionnées, caractérisé en ce que les moyens de filtrage comportent, agencé en aval des rouleaux d'alignement, au moins un dispositif d'élimination sélective comportant

Grâce au système d'alimentation selon l'invention, on augmente encore la fiabilité de tels systèmes en traitant de manière systématiques les différents cas de préformes mal positionnées et plus particulièrement celui des préformes allongées.

De façon surprenante, on a par ailleurs constaté que le système selon l'invention permet de réduire considérablement la longueur des rouleaux par rapport à ceux se trouvant dans les systèmes connus.

Avantageusement, un système d'alimentation conforme aux enseignements de l'invention peut être mis en oeuvre dans des installations automatisées comportant des machines à très hautes cadences, c'est-à-dire capable par exemple de souffler plus de 40.000 récipients par heure.

Selon d'autres caractéristiques de l'invention :
- le dispositif d'élimination sélective comporte des moyens mobiles d'élimination qui sont commandés en déplacement par un actionneur piloté;
- les moyens mobiles d'élimination sont aussi commandés en déplacement pour éliminer les préformes allongées formées par un ensemble de préformes allongées emboîtées qui arrivent des rouleaux sur les rails couchées et orientées longitudinalement et qui s'étendent globalement longitudinalement sur les rails de convoyage;
- le dispositif d'élimination sélective comporte des moyens de détection aptes à fournir à l'actionneur, un signal de détection représentatif de la présence sur les rails d'au moins une préforme allongée ;
- les moyens de détection comportent au moins un capteur qui est agencé à une hauteur déterminée au dessus des rails de manière à identifier une préforme allongée en fonction de la position de sa collerette radiale;
- les moyens mobiles d'élimination sont constitués par au moins un tronçon de rail mobile qui est susceptible, lorsqu'une préforme allongée est détectée, d'être déplacé par l'actionneur entre une position de convoyage des préformes et une position escamotée d'élimination dans laquelle les préformes sont éliminées vers des moyens de récupération et/ou de recirculation ;
- le tronçon de rail est monté mobile en translation vers l'extérieur selon une direction transversale de manière à former une trappe qui, en position escamotée, provoque la chute par gravité de toutes les préformes se trouvant sur le tronçon de rail mobile ;
- le système comporte des moyens pour bloquer la file des préformes situées en amont des moyens mobiles d'élimination, lorsqu'une préforme allongée est détectée ;
- les moyens de blocage sont constitués par au moins un bras de blocage qui est monté pivotant entre une position escamotée de repos et une position de blocage dans laquelle une partie du bras coopère avec une partie du col d'une préforme, dite préforme de tête, de manière à immobiliser la file des préformes situées en amont du tronçon de rail mobile lorsqu'il est déplacé vers sa position escamotée d'élimination ;
- la partie de blocage du bras comporte un profil courbe destiné à venir en contact tangentiellement avec le col de la préforme de tête ;
- les moyens de filtrage comportent au moins une roue d'éjection destinée à éjecter d'autres types de préformes mal positionnées, telles que les préformes en position « emboîtée debout », qui est agencée en amont du dispositif d'élimination sélective des préformes allongées.

D'autres caractéristiques et avantages de l'invention apparaîtront à la lecture de la description détaillée qui suit ainsi qu'au vu des dessins dans lesquels :
- la figure 1 est une vue schématique de côté d'un système d'alimentation de préformes comportant un dispositif selon l'invention pour éliminer sélectivement de la file les préformes mal positionnées de type allongé ;
- les figures 2 et 3 sont des vues partielles du système selon la figure 1 qui illustrent schématiquement en coupe transversale et en vue dessus respectivement, une préforme allongée qui n'est pas susceptible d'être éliminée par des moyens de filtrage comme la roue d'éjection ;
- les figures 4 et 5 représentent schématiquement des vues de dessus d'un mode de réalisation préféré d'un dispositif d'élimination sélective conforme aux enseignements de l'invention et illustrent respectivement les positions de convoyage et escamotée d'élimination du tronçon de rail mobile formant les moyens d'élimination.

Dans la description qui va suivre, des chiffres de référence identiques désignent des pièces identiques ou ayant des fonctions similaires.

Par convention, et à titre non limitatif, on utilisera les termes "aval" ou "amont" et les directions "longitudinale", "transversale" ou "verticale" pour désigner respectivement des éléments ou des positions par rapport au sens de défilement des préformes et selon le trièdre (L, V, T) représenté sur les figures.

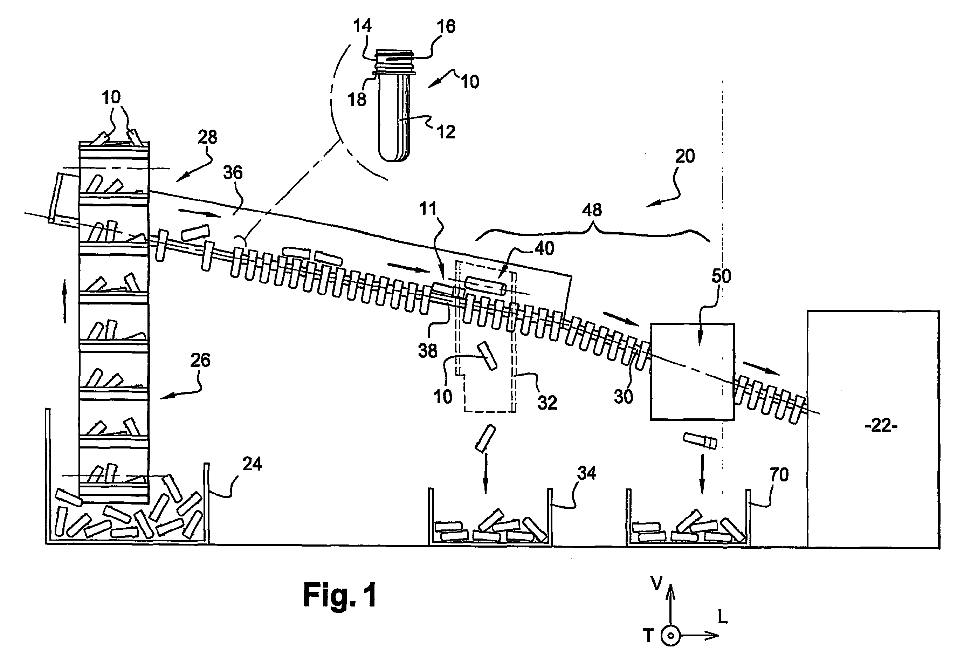

On a représenté sur la figure 1 de manière très schématique un système 20 d'alimentation de préformes selon l'état de la technique comportant, conformément à l'invention, un dispositif d'élimination sélective des préformes allongées.

Un agrandissement illustre en détail un exemple de préforme 10 susceptible d'être utilisée dans un tel système 20 d'alimentation.

De manière connue une telle préforme 10 comporte un corps 12 sensiblement tubulaire qui est fermé à l'une de ses extrémités axiales et présente à son autre extrémité un col 14 ayant la forme définitive du col du récipient final.

Le col 14 de la préforme 10 comporte un filetage 16 et une collerette 18 annulaire de support qui s'étend, à la base du col, radialement vers l'extérieur.

Un tel système 20 d'alimentation est par exemple destiné à alimenter en préformes 10 une machine 22 de soufflage.

Le système 20 d'alimentation comporte en amont un bac 24 ou trémie de stockage dans lequel les préformes 10 sont stockées en vrac. Un élévateur 26 permet de prélever les préformes 10 dans le bac 24 de stockage pour les déverser à l'extrémité supérieure d'un dispositif 28 de démêlage et d'alignement. Dans ce dispositif 28 de démêlage et d'alignement, les préformes 10 sont orientées col 14 en haut et sont alignées en une file de manière à être ensuite délivrées en aval à des rails 30 de convoyage qui transportent les préformes 10 vers une machine, telle que la machine 22 de soufflage.

Les moyens d'alimentation des rails 30 de convoyage constitués par le bac 24 de stockage, l'élévateur 26 et le dispositif 28 de démêlage et d'alignement ne sont donnés qu'à titre d'exemple et ne sont nullement limitatifs.

Le système 20 comporte de préférence des moyens de récupération des préformes mal positionnées qui sont éjectées, en effet les préformes 10 n'étant pas détériorées au cours de cette opération peuvent avantageusement être réutilisées dans le système 20.

Les moyens de récupération sont par exemple constitués d'une trémie 32 de récupération dont l'extrémité inférieure communique avec un bac 34 de récupération dans lequel tombent les préformes 10 mal positionnées qui ont été éjectées.

En variante, les moyens de récupération comportent un tapis de recirculation qui permet de ramener les préformes éjectées jusqu'au bac 24 de stockage. Toutefois, si un tel tapis de recirculation permet d'automatiser le traitement des préformes éjectées, il présente le risque de réintroduire dans le système d'alimentation des préformes notamment en position emboîtée.

De manière connue, le dispositif 28 de démêlage et d'alignement est composé d'un caisson comportant par exemple deux parois 36 latérales verticales. Le fond du caisson est formé par deux rouleaux 38 d'axes sensiblement parallèles A1 et A2 qui s'étendent sensiblement sur toute la longueur du caisson. Les axes A1 et A2 sont inclinés par rapport à l'horizontale d'une pente correspondant à la pente d'inclinaison du dispositif 28 de démêlage et d'alignement.

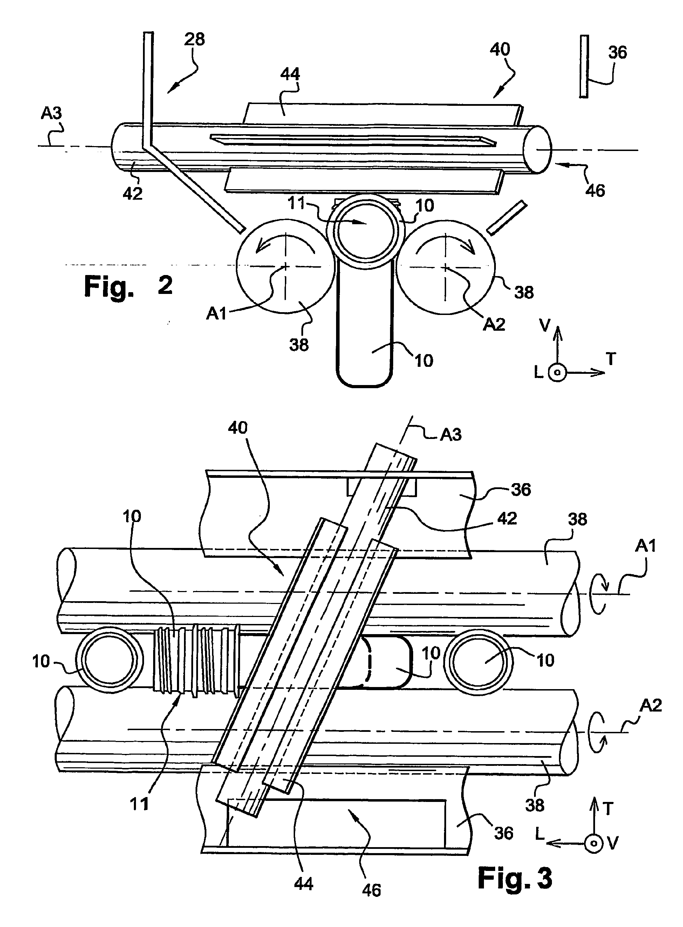

Comme on peut le voir sur les figures 2 et 3, les deux rouleaux 38 sont écartés l'un de l'autre de manière à laisser subsister entre eux un espace dont la dimension transversale est légèrement supérieure au diamètre du corps 12 de la préforme 10 du type de celle représentée à la figure 1.

Ainsi, le diamètre de la collerette 18 radiale externe du col 14 de la préforme 10 est supérieur à la dimension transversale de l'espace séparant les deux rouleaux 38. De la sorte, lorsqu'une préforme 10 se présente sur les rouleaux 38, son corps 12 peut plonger dans l'espace entre les deux rouleaux 38 mais elle se trouve alors retenue par la collerette 18 et respectivement alignée dans une position sensiblement verticale et orientée avec le col 14 en haut.

Pour favoriser le bon positionnement de la préforme 10, chaque rouleau 38 est animé d'un mouvement de rotation autour de son axe respectif A1 ou A2. Les deux rouleaux 38 tournent en sens inverse l'un de l'autre, soit dans le sens indiqué sur les figures, soit chacun dans le sens contraire.

Pour s'assurer que toutes les préformes déversées dans le dispositif 28 de démêlage et d'alignement viennent au contact des rouleaux 38, on peut voir sur la figure 2 que la partie inférieure des parois 36 latérales du caisson est formée par des pans inclinés qui ramènent toutes les préformes vers le centre de la trémie, sur les rouleaux 38.

Le dispositif 28 de démêlage et d'alignement est avantageusement équipé de moyens de filtrage pour éliminer les préformes mal positionnées. Les moyens de filtrage comportent ici une roue 40 d'éjection formant un premier dispositif d'élimination des préformes mal positionnées.

La roue 40 d'éjection permet d'évacuer les préformes 10 qui, en arrivant près de l'extrémité inférieure du dispositif 28 de démêlage et d'alignement, n'ont pas été orientées et alignées entre les deux rouleaux 38.

La roue 40 d'éjection comporte pour l'essentiel un arbre 42 central qui s'étend dans un plan parallèle au plan défini par les deux axes A1 et A2 des deux rouleaux 38 d'alignement, verticalement au-dessus de ce plan. Avantageusement, l'axe A3 de l'arbre 42 central de la roue 40 d'éjection est incliné par rapport à une perpendiculaire à la direction des axes A1 et A2, par exemple de l'ordre de 45°.

L'inclinaison de l'axe A3 est fonction de la vitesse de défilement des préformes 10 dans le dispositif 28 de démêlage et d'alignement, c'est à dire en fonction de la géométrie et de la cadence d'alimentation du système, cet angle pourra donc par exemple varier entre 20° et 75°.

L'arbre 42 est relié à un système tel qu'un moteur indépendant (non représenté) d'entraînement en rotation autour de son axe A3 qui l'entraîne à une vitesse de l'ordre par exemple de 250 tours par minute.

L'arbre 42 est muni de pales 44 radiales, qui sont en l'occurrence au nombre de quatre réparties angulairement de manière régulière autour de l'axe A3, et qui sont par exemple réalisées en matière élastomère souple.

Les pales 44 s'étendent le long de l'axe A3 de manière à balayer, lorsque la roue 40 d'éjection est entraînée en rotation autour de son axe A3, sensiblement tout l'espace transversal situé au-dessus des rouleaux 38 dans la trémie 28.

En variante, les pales 44 pourraient être remplacées par des filaments radiaux souples, la roue 40 d'éjection prenant alors la forme d'une brosse rotative.

En regard de la roue 40 d'éjection, le dispositif 28 de démêlage et d'alignement comporte au moins un orifice 46 latéral disposé à la hauteur de la roue 40 d'éjection, en amont de celle-ci par rapport au sens de défilement des préformes, destiné à permettre l'évacuation des préformes éjectées vers la trémie 32 de récupération.

Le positionnement vertical de la roue 40 et la dimension radiale des pales 44 sont choisis pour que la roue 40, entraînée en rotation autour de son axe A3, balaye l'espace situé immédiatement au-dessus des rouleaux 38 sans venir au contact de préformes 10 qui seraient correctement orientées entre les deux rouleaux 38, c'est à dire globalement verticalement.

Ainsi, le col 14 d'une préforme correctement orientée passe sous la roue 40 d'éjection, sans être touchée par celle-ci.

Au contraire, certaines préformes mal positionnées ne vont pas passer sous la roue 40 d'éjection et vont ainsi être éliminées.

Tel sera le cas notamment d'un ensemble de préformes 10 qui se trouvent en position « emboîtée debout », dont la préforme supérieure sera balayée par la roue 40 d'éjection et projetée directement vers l'orifice 46 latéral d'évacuation.

Ainsi, la roue 40 d'éjection permet, en éjectant directement les préformes mal positionnées, d'éviter une accumulation, dans le dispositif 28 de démêlage et d'alignement, de préformes mal positionnées susceptible de provoquer de nombreux bourrages, notamment dans les alimentateurs à hautes cadences.

Cependant comme on peut le voir sur les figures 2 et 3, la roue 40 d'éjection ne permet pas d'éliminer de manière systématique toutes les préformes mal positionnées.

Plus précisément, il est possible qu'un ensemble 11 de préformes emboîtées comme illustré sur les figures 2 et 3, vienne à se placer dans une position dite « allongée », c'est-à-dire couchées entre les rouleaux 38 et orientées longitudinalement de manière à s'étendre du corps 12 au col 14 globalement parallèlement aux axes A1, A2 des rouleaux 38.

Un tel ensemble 11 de préformes allongées emboîtées va parvenir à passer sous la roue 40, notamment lorsqu'il se trouve intercalé longitudinalement entre les cols 14 d'autres préformes 10 correctement positionnées dans les rouleaux 38. Bien entendu, la situation est analogue qu'il s'agisse d'une préforme 10 allongée seule ou d'un ensemble 11 de préformes emboîtées.

Avantageusement, un tel système 20 d'alimentation doit comporter des moyens 48 de filtrage qui soient capables d'éliminer les différents types de préformes mal positionnées de manière à garantir un fonctionnement fiable de l'installation, exempt notamment de risques d'endommagement ou de bourrage.

Conformément à l'invention, les moyens 48 de filtrage comportent, en aval des rouleaux 38 d'alignement, au moins un dispositif 50 d'élimination sélective des préformes 10 dites allongées, formées des préformes allongées seules qui arrivent des rouleaux sur les rails couchées et orientées longitudinalement et qui s'étendent globalement longitudinalement sur les rails 30 de convoyage.

Le dispositif 50 d'élimination sélective comporte avantageusement des moyens 52 mobiles d'élimination qui sont commandés en déplacement par un actionneur 54 piloté et des moyens 56 de détection aptes à fournir à l'actionneur 54, un signal de détection représentatif de la présence sur les rails d'au moins une préforme 10 allongée.

Les moyens 56 de détection comportent au moins un capteur 58 qui est agencé à une hauteur déterminée au dessus des rails 30 de manière à identifier une préforme 10 allongée en fonction de la position de sa collerette radiale 18.

Avantageusement, le système 20 comporte des moyens pour bloquer la file des préformes situées en amont des moyens 52 mobiles d'élimination du dispositif 50, lorsqu'une préforme 10 allongée est détectée.

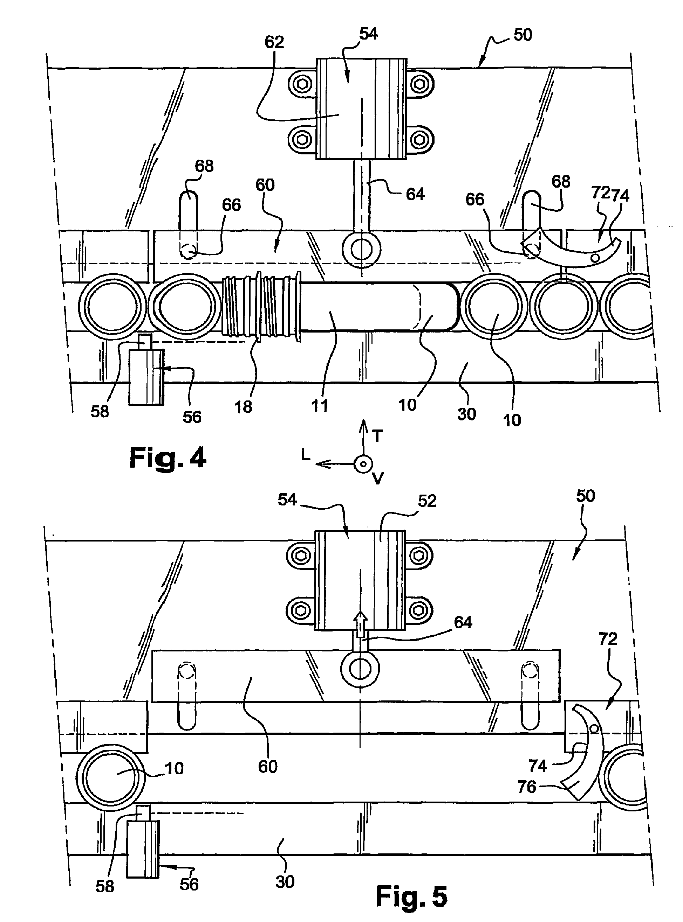

Les figures 4 et 5 illustrent plus particulièrement un mode de réalisation préféré d'un tel dispositif 50 d'élimination sélective des préformes 10 allongées.

Selon ce mode de réalisation, les moyens 52 mobiles d'élimination sont constitués par au moins un tronçon 60 de rail mobile qui est susceptible, lorsqu'une préforme 10 allongée est détectée par le capteur 58, d'être déplacé par l'actionneur 54 vers une position escamotée d'élimination.

L'actionneur 54 du tronçon 60 de rail mobile est par exemple constitué par un vérin 62 pneumatique ou hydraulique comportant une tige 64 d'actionnement solidaire du tronçon 60.

Le tronçon 60 de rail est ici monté mobile en translation, plus précisément selon une direction transversale et vers l'extérieur par rapport à la file des préformes 10 convoyées dans les rails 30.

De préférence, le tronçon 60 comporte des pions 66 qui coulissent dans des lumières 68 complémentaires de manière à former des moyens de guidage en déplacement du tronçon 60 entre ses positions respectives de convoyage et escamotée d'élimination.

Le fonctionnement du dispositif 50 d'élimination sélective va être décrit en détail ci-après.

Tout d'abord, le capteur 58 détecte la présence de la collerette radiale 18 de la première préforme 10 de l'ensemble 11 de préformes emboîtées allongées. Le capteur 58 peut par exemple être un capteur optique de type infrarouge ou encore mécanique tel qu'un contacteur avec lequel la collerette va venir en contact.

Le capteur 58 est agencé transversalement et verticalement au dessus des rails 30 de manière à détecter uniquement la collerette 18 radiale des préformes 10 allongées, en effet les collerettes 18 des préformes 10 qui sont correctement positionnées et en appui sur les faces supérieures des rails 30 passent ainsi sous le capteur 58 sans être détectées.

Lorsque le capteur 58 détecte une préforme allongée, il fournit alors un signal de détection destiné à piloter l'actionneur 54.

Le signal commande alors l'actionneur 54 de manière à provoquer le déplacement du tronçon 60 de la position de convoyage illustrée à la figure 4 vers la position escamotée illustrée à la figure 5.

Le tronçon 60 forme ainsi une trappe qui, en position escamotée, provoque la chute par gravité de toutes les préformes 10, 11 se trouvant sur le tronçon 60 de rail mobile.

De préférence, il est prévu des moyens de récupération et/ou de recirculation, tel qu'un autre bac 70 de récupération représenté à la figure 1.

Avantageusement, le dispositif 50 d'élimination sélective comporte des moyens 72 pour bloquer la file des préformes situées en amont du tronçon 60 de rail mobile, lorsque le capteur 58 détecte une préforme allongée.

Les moyens 72 de blocage sont mobiles et déplacés par exemple par un actionneur (non représenté) qui est piloté grâce au signal de détection du capteur 58 de manière à synchroniser le fonctionnement des différents moyens du dispositif 50 d'élimination sélective.

Les moyens 72 de blocage sont ici constitués par un bras de blocage 74 qui est monté pivotant entre une position escamotée de repos illustrée à la figure 4 et une position de blocage illustrée à la figure 5.

En position de blocage, une partie 76 du bras 74 coopère avec une partie, tel que le col 14 de la préforme 10, dite de tête, de manière à immobiliser la file des préformes situées en amont du tronçon 60 de rail mobile avant que l'actionneur 54 ne provoque son déplacement vers sa position escamotée d'élimination.

La partie 76 de blocage du bras 74 comporte un profil courbe destiné à venir en contact tangentiellement avec le col 14 de la préforme de tête. Grâce à ce profil, le bras 74 est susceptible de s'adapter à différents types de préformes.

En variante, le tronçon 60 d'élimination sélective pourrait être monté mobile en rotation, par exemple pivotant autour d'un axe longitudinal, de manière à éliminer comme précédemment les préformes 10 allongées.

De préférence, le dispositif 50 d'élimination sélective des préformes allongées est agencé en aval de la roue 40 d'éjection de manière à agir sur un flux de préformes correctement ordonnées et stabilisées dans les rails 30 duquel ont été éliminées les autres préformes mal positionnées.

Ainsi, les moyens 48 de filtrage comportent avantageusement au moins une roue 40 d'éjection destinée à éjecter d'autres types de préformes mal positionnées, telles que les préformes en position « emboîtée debout », qui est agencée en amont du dispositif 50 d'élimination sélective des préformes allongées.

## Revendications

1. Système (20) d'alimentation de préformes, notamment destiné à alimenter une machine de soufflage de récipients tels que des bouteilles, du type comportant d'amont en aval selon la direction longitudinale de défilement des préformes (10), au moins un dispositif (28) de démêlage et d'alignement dont l'extrémité supérieure est approvisionnée en préformes (10) en vrac et dont l'extrémité inférieure comporte au moins deux rouleaux (38) d'alignement, sensiblement parallèles et entraînés en rotation autour de leur axe respectif (A1, A2), qui sont destinés à positionner les préformes (10) dans des rails de convoyage (30), inclinés par rapport à l'horizontale, pour les convoyer vers la machine (22), et du type comportant, en amont de la machine (22), des moyens (48) de filtrage pour éliminer les préformes mal positionnées, **caractérisé en ce que** les moyens (48) de filtrage comportent, en aval des rouleaux (38) d'alignement, au moins un dispositif (50) d'élimination sélective agencé pour éliminer les préformes (10) allongées seules qui arrivent des rouleaux sur les rails couchées et orientées longitudinalement et qui s'étendent globalement longitudinalement sur les rails (30) de convoyage.

2. Système d'alimentation de préformes selon la revendication 1, **caractérisé en ce que** le dispositif (50) d'élimination sélective comporte des moyens (52) mobiles d'élimination qui sont commandés en déplacement par un actionneur (54) piloté.

3. Système (20) d'alimentation de préformes selon la revendication 2, **caractérisé en ce que** les moyens (52) mobiles d'élimination sont aussi commandés en déplacement pour éliminer les préformes (10) allongées formées par un ensemble (11) de préformes allongées emboîtées qui arrivent des rouleaux sur les rails couchées et orientées longitudinalement et qui s'étendent globalement longitudinalement sur les rails (30) de convoyage.

4. Système d'alimentation de préformes selon l'une des revendications 2 ou 3, **caractérisé en ce que** le dispositif (50) d'élimination sélective comporte des moyens (56) de détection aptes à fournir à l'actionneur (54), un signal de détection représentatif de la présence sur les rails (30) d'au moins une préforme allongée.

5. Système d'alimentation de préformes selon la revendication 4, **caractérisé en ce que** les moyens (56) de détection comportent au moins un capteur (58) qui est agencé à une hauteur déterminée au dessus des rails (30) de manière à identifier une préforme allongée en fonction de la position de sa collerette (18) radiale.

6. Système d'alimentation de préformes selon l'une quelconque des revendications 2 à 5, **caractérisé en ce que** les moyens (52) mobiles d'élimination sont constitués par au moins un tronçon (60) de rail mobile qui est susceptible, lorsqu'une préforme allongée est détectée, d'être déplacé par l'actionneur (54) entre une position de convoyage des préformes et une position escamotée d'élimination dans laquelle les préformes sont éliminées vers des moyens (70) de récupération et/ou de recirculation.

7. Système d'alimentation de préformes selon la revendication 6, **caractérisé en ce que** le tronçon (60) de rail est monté mobile en translation vers l'extérieur selon une direction transversale de manière à former une trappe qui, en position escamotée, provoque la chute par gravité de toutes les préformes se trouvant sur le tronçon de rail mobile.

8. Système d'alimentation de préformes selon l'une quelconques des revendications 2 à 7, **caractérisé en ce qu'**il comporte des moyens (72) pour bloquer la file des préformes (10) situées en amont des moyens mobiles (52) d'élimination, lorsqu'une préforme allongée est détectée.

9. Système d'alimentation de préformes selon la revendication 8, **caractérisé en ce que** les moyens de blocage (72) sont constitués par au moins un bras (74) de blocage qui est monté pivotant entre une position escamotée de repos et une position de blocage dans laquelle une partie (76) du bras (74) coopère avec une partie du col (14) d'une préforme, dite préforme de tête, de manière à immobiliser la file des préformes (10) situées en amont du tronçon (60) de rail mobile lorsqu'il est déplacé vers sa position escamotée d'élimination.

10. Système d'alimentation de préformes selon la revendication 9, **caractérisé en ce que** la partie (76) de blocage du bras (74) comporte un profil courbe destiné à venir en contact tangentiellement avec le col (14) de la préforme de tête.

11. Système d'alimentation de préformes selon l'une quelconque des revendications précédentes, **caractérisé en ce que** les moyens (48) de filtrage comportent au moins une roue (40) d'éjection destinée à éjecter d'autres types de préformes mal positionnées, telles que les préformes en position « emboîtée debout », qui est agencée en amont du dispositif (50) d'élimination sélective des préformes allongées.

## Claims

1. System (20) of feeding preforms, particularly designed to feed a machine for blow moulding receptacles such as bottles, of the type comprising, from upstream to downstream in the longitudinal direction of travel of the preforms (10), at least one sorting and alignment device (28) whose top end is fed with jumbled preforms (10) and whose bottom end comprises at least two alignment rollers (38), substantially parallel and rotated about their respective axis (A1 , A2), that are designed to position the preforms (10) in conveyor rails (30), inclined relative to the horizontal, to convey them to the machine (22), and of the type comprising, upstream of the machine (22), filtering means (48) to discard the incorrectly positioned preforms, **characterized in that** the filtering means (48) comprise, downstream of the alignment rollers (38), at least one selective discarding device (50) arranged to discard the lying singly preforms (10), that arrive from the rollers on the rails lying down and oriented longitudinally and that extend generally longitudinally on the conveyor rails (30).

2. System of feeding preforms according to Claim 1, **characterized in that** the selective discarding device (50) comprises movable discarding means (52) that are controlled in movement by a driven actuator (54).

3. System (20) of feeding preforms, particularly designed to feed a machine for blow moulding receptacles such as bottles, of the type comprising, from upstream to downstream in the longitudinal direction of travel of the preforms (10), at least one sorting and alignment device (28) whose top end is fed with jumbled preforms (10) and whose bottom end comprises at least two alignment rollers (38), substantially parallel and rotated about their respective axis (A1, A2), that are designed to position the preforms (10) in conveyor rails (30), inclined relative to the horizontal, to convey them to the machine (22), and of the type comprising, upstream of the machine (22), filtering means (48) to discard the incorrectly positioned preforms, **characterized in that** the filtering means (48) comprise, arranged downstream of the alignment rollers (38), at least one selective discarding device (50) comprising movable discarding means (52) that are controlled in movement by a driven actuator (54) to discard the lying preforms (10), formed by a lying singly preform (10) or by a set (11) of nested lying preforms that arrive, from the rollers on the rails lying down and oriented longitudinally and that extend generally longitudinally on the conveyor rails (30).

4. System of feeding preforms according to one of Claims 2 or 3, **characterized in that** the selective discarding device (50) comprises detection means (56) capable of supplying to the actuator (54) a detection signal representative of the presence on the rails (30) of at least one lying preform.

5. System of feeding preforms according to Claim 4, **characterized in that** the detection means (56) comprise at least one sensor (58) that is arranged at a determined height above the rails (30) in order to identify a lying preform depending on the position of its radial collar (18).

6. System of feeding preforms according to any one of Claims 2 to 5, **characterized in that** the movable discarding means (52) consist of at least one section (60) of movable rail that is capable, when a lying preform is detected, of being moved by the actuator (54) between a position of conveying the preforms and a retracted discarding position in which the preforms are discarded to recovery and/or recirculation means (70).

7. System of feeding preforms according to Claim 6, **characterized in that** the section (60) of rail is mounted so as to move in translation outwards in a transverse direction so as to form a trap door which, in the retracted position, causes all the preforms that are on the movable section of rail to fall by gravity.

8. System of feeding preforms according to any one of the preceding claims, **characterized in that** it comprises means (72) for stopping the line of preforms (10) situated upstream of the mobile discarding means (52) when a lying preform is detected.

9. System of feeding preforms according to Claim 8, **characterized in that** the stopping means (72) consist of at least one stopping arm (74) that is mounted so as to pivot between a retracted rest position and a stopping position in which a portion (76) of the arm (74) interacts with a portion of the neck (14) of a preform, called the leading preform, in order to immobilize the line of preforms (10) situated upstream of the movable section (60) of rail when it is moved to its retracted discarding position.

10. System of feeding preforms according to Claim 9, **characterized in that** the stopping portion (76) of the arm (74) comprises a curved profile designed to come into contact tangentially with the neck (14) of the leading preform.

11. System of feeding preforms according to any one of the preceding claims, **characterized in that** the filtering means (48) comprise at least one ejection wheel (40) designed to eject other types of incorrectly positioned preforms, such as the preforms in the "nested upright" position, that is arranged upstream of the device (50) for selectively discarding the lying preforms.

## Patentansprüche

1. Vorformling-Zufuhrvorrichtung (20), insbesondere zur Bestückung einer Blasformmaschine für Behälter wie beispielsweise Flaschen, mit mindestens einer Vorrichtung (28) zum Aussortieren und Ausrichten entlang der Längsrichtung des Durchlaufs der Vorformlinge (10) von vorn bis hinten, wobei das obere Ende mit losen Vorformlingen versorgt wird und das untere Ende mindestens zwei im wesentlichen parallele Ausrichtungsrollen (38) besitzt, die um ihre jeweilige Achse (A1, A2) herum drehend angetrieben werden, und mittels derer die Vorformlinge (10) auf Transportschienen (30) positioniert werden sollen, welche gegenüber der Horizontalen geneigt sind, um die Vorformlinge zu der Maschine (22) zu transportieren, und sich vor der Maschine (22) Filterelemente (48) befinden, um die falsch positionierten Vorformlinge zu entfernen, **dadurch gekennzeichnet, dass** die Filterelemente (48) hinter den Ausrichtungsrollen (38) mindestens eine Vorrichtung (50) zum gezielten Entfernen besitzen, mit dem nur die Längs-Vorformlinge (10) entfernt werden sollen, die auf den Schienen von den Rollen kommen und längs ausgerichtet sind, und die im allgemeinen längs auf den Transportschienen (30) verlaufen.

2. Vorformling-Zufuhrvorrichtung nach Anspruch 1, **dadurch gekennzeichnet, dass** die Vorrichtung zum gezielten Entfernen (50) bewegliche Elemente zum Entfernen besitzt, deren Verschiebung durch einen Stellantrieb (54) gesteuert wird.

3. Vorformling-Zufuhrvorrichtung (20) nach Anspruch 2, **dadurch gekennzeichnet, dass** die Verschiebung der beweglichen Elemente (52) zum Entfernen auch gesteuert wird, um die Längs-Vorformlinge (10) zu entfernen, die von einer Einheit (11) an ineinander verschachtelter Längs-Vorformlinge gebildet wird, die auf den Schienen von den Rollen kommen und längs ausgerichtet sind, und die im allgemeinen längs auf den Transportschienen (30) verlaufen.

4. Vorformling-Zufuhrvorrichtung nach einem der Ansprüche 2 oder 3, **dadurch gekennzeichnet, dass** die Vorrichtung zum gezielten Entfernen (52) Anzeigeeinrichtungen (56) aufweist, die dem Stellantrieb (54) ein Meldesignal liefern, welches das Vorhandensein mindestens eines Längs-Vorformlings auf den Schienen (30) anzeigt.

5. Vorformling-Zufuhrvorrichtung (20) nach Anspruch 4, **dadurch gekennzeichnet, dass** die Anzeigeeinrichtungen (54) mindestens einen Messfühler (58) aufweisen, der auf einer festgelegten Höhe oberhalb der Schienen (30) angebracht ist, so dass je nach der Position ihres radialen Bundes (18) ein Längs-Vorformling festgestellt wird.

6. Vorformling-Zufuhrvorrichtung nach einem der Ansprüche 2 bis 5, **dadurch gekennzeichnet, dass** die beweglichen Elemente (52) zum Entfernen aus mindestens einem beweglichen Schienenabschnitt (60) bestehen, der bei Feststellung eines Längs-Vorformlings durch den Stellantrieb (54) verschoben werden kann, und zwar zwischen einer Transportposition der Vorformlinge und einer eingezogenen Position zum Entfernen, in der die Vorformlinge zu Sammeleinrichtungen (70) und/oder Rezirkulationseinrichtungen hin entfernt werden.

7. Vorformling-Zufuhrvorrichtung nach Anspruch 6, **dadurch gekennzeichnet, dass** der Schienenabschnitt (60) in Querrichtung nach außen verschiebbar montiert ist, so dass er eine Klappe bildet, die in eingefahrener Position das Herunterfallen alles Vorformlinge, die sich auf dem beweglichen Schienenabschnitt befinden, durch Schwerkraft verursachen.

8. Vorformling-Zufuhrvorrichtung nach einem der vorhergehenden Ansprüche 2 bis 7, **dadurch gekennzeichnet, dass** sie Einrichtungen (72) zum Blockieren der Reihe der Vorformlinge (10) besitzt, die den beweglichen Elementen (52) zum Entfernen vorgelagert sind, wenn ein Längs-Vorformling festgestellt wird.

9. Vorformling-Zufuhrvorrichtung nach Anspruch 8, **dadurch gekennzeichnet, dass** die Einrichtungen zum Blockieren (72) aus mindestens einem Blockierarm (74) bestehen, der drehbar zwischen einer eingefahrenen Ruhestellung und einer Blockierstellung montiert ist, in der ein Abschnitt (76) des Arms (74) mit einem Teil des Halses (14) eines Vorformlings, dem sogenannten Kopf-Vorformling, zusammenwirkt, um die Reihe der Vorformlinge (10), die dem beweglichen Schienenabschnitt (60) vorgelagert ist, zu immobilisieren, wenn sie zu ihrer eingefahrenen Position des Entfernens hin verschoben wird.

10. Vorformling-Zufuhrvorrichtung nach Anspruch 9, **dadurch gekennzeichnet, dass** der Abschnitt (76) des Blockierarms (74) ein gebogenes Profil besitzt, das tangential mit dem Hals (14) der Kopf-Vorformling in Kontakt kommen soll.

11. Vorformling-Zufuhrvorrichtung nach einem der vorhergehenden Ansprüche, **dadurch gekennzeichnet, dass** die Filterelemente mindestens ein Auswurfrad (40) besitzen, mit dem weitere, falsch positionierte Vorformlinge, wie beispielsweise die Vorformlinge in der Position "aufrecht ineinander verschachtelt", ausgeworfen werden sollen, und das der Vorrichtung (50) zum gezielten Entfernen von Längs-Vorformlingen vorgelagert ist.
